Europäisches Patentamt

**European Patent Office**

Office européen des brevets

(11) Publication number : **0 552 063 A1**

# EUROPEAN PATENT APPLICATION

(21) Application number : **93300299.0**

(22) Date of filing : **18.01.93**

(51) Int. Cl.$^5$ : **C08L 23/02**, C08K 13/02,
// A01G9/14 , (C08K13/02,
5:02, 3:26)

(30) Priority : **17.01.92 JP 6254/92
17.01.92 JP 6255/92**

(43) Date of publication of application :
**21.07.93 Bulletin 93/29**

(84) Designated Contracting States :
**DE FR GB NL**

(71) Applicant : **SUMITOMO CHEMICAL
COMPANY, LIMITED
5-33, Kitahama 4-chome Chuo-ku
Osaka (JP)**

(72) Inventor : **Kotani, Kozo
1-6-8, Shiroyamacho
Toyonaka-shi, Osaka-fu (JP)**
Inventor : **Negawa, Hideo
673-29, Oaza Kido, Shiga-cho
Shiga-gun, Shiga-ken (JP)**
Inventor : **Sakaya, Taiichi
1-9-1-309, Tamagawa
Takatsuki-shi, Osaka-fu (JP)**

(74) Representative : **Geering, Keith Edwin
REDDIE & GROSE 16 Theobalds Road
London WC1X 8PL (GB)**

(54) **Polyolefin resin composition and film thereof.**

(57)  Provided is an incineratable polyolefin resin composition containing a fluoroalkyl group-containing compound. The resin composition comprises a polyolefin resin, an inorganic compound having silicon-oxygen bond or aluminium-oxygen bond, and a fluoroalkyl group-containing compound.

EP 0 552 063 A1

The present invention relates to a resin composition and a film thereof.

Heretofore, it has been known that addition of a small amount of a fluoroalkyl group-containing compound to a resin improves various functions of the resulting resin composition, including, for example, the slip property and the ability to prevent mold staining.

Above all, a fluoroalkyl group-containing fluorine surfactant is often incorporated into a resin to give mold releasability or anti-staining properties due to its excellent surface tension lowering effect. In addition, a fluoroalkyl group-containing fluorine surfactant, especially one containing a perfluoroalkyl group or a perfluoroalkenyl group, is incorporated in film for agricultural or horticultural houses or tunnels to decrease generation of fog and mist, as proposed in Japanese Patent Publication Nos. 35573/84 and 12498/88.

Being different from other non-combustible and flame-retardant resins such as polyvinyl chloride resins, a polyolefin resin is characterized by its easy combustibility so that articles and films formed from the resin composition are often disposed of by incineration.

Agricultural covering film is of two types, one being polyvinyl chloride film and the other being polyolefin film such as polyethylene and ethylene-vinyl acetate copolymer film. Disposal methods for agricultural covering film include burning, recycling and burying. Burning of agricultural polyvinyl chloride film needs a furnace equipped with a device for removing the hydrogen chloride gas generated, and so almost all the used film is recycled by recycling traders or discarded as waste for burying.

On the other hand, since agricultural polyolefin film is easily incineratable, the used film is often burnt in the open air; however, fluoroalkyl group-containing compounds in such film (e. g. fluoroalkyl group-containing surfactant, especially perfluoroalkyl or perfluoroalkenyl group-containing surfactant) are decomposed to generate hydrogen fluoride gas on burning; perfluoroalkyl group-containing compounds in the film decompose at high temperature, for example on burning, to generate not only hydrogen fluoride gas but also perfluoroisobutene.

The present inventors have found that generation of hydrogen fluoride gas on burning a resin composition containing a fluoroalkyl group-containing compound may be noticeably decreased by incorporating in the composition an inorganic compound containing silicon-oxygen bond or aluminiumoxygen bond; and that the generation of perfluoroisobutene may be almost completely inhibited by using a fluoroalkyl group-containing compound having 1,1-difluoromethyl group termination.

Specifically, the present invention provides a polyolefin resin composition containing from 0.5 to 50 parts by weight of inorganic compound containing silicon-oxygen bond or aluminium-oxide bond and from 0.02 to 5 parts by weight of fluoroalkyl group-containing compound per 100 parts by weight of polyolefin resin and also provides an agricultural film formed from the composition.

The polyolefin resins which can be used in the present invention include, for example, homopolymers of $\alpha$-olefins and copolymers of different monomers composed mainly of $\alpha$-olefin, such as polyethylene, polypropylene, ethylene-$\alpha$-olefin copolymer (e.g. ethylene-propylene copolymer, ethylene-butene-1 copolymer, ethylene-4-methyl-1-pentene copolymer, ethylene-hexene copolymer, ethylene-octene copolymer, ethylene-decene copolymer), as well as ethylenevinyl acetate copolymer, ethylene-acrylic acid copolymer, ethylene=methyl methacrylate copolymer, ethylene-vinyl acetate-methyl methacrylate copolymer, ionomer resin, and the like.

The inorganic compounds which can be used, containing silicon-oxygen bond or aluminium-oxygen bond in the molecule, include silicates, aluminosilicates, aluminates, hydrotalcites, and the like.

The silicate compounds for use in the present invention include, for example, silicon dioxide, magnesium silicate, calcium silicate, aluminium silicate, titanium silicate, and the like; the aluminosilicate compound include, for example, sodium aluminosilicate, potassium aluminosilicate, calcium aluminosilicate, and the like; the aluminate compounds include, for example, alumina, sodium aluminate, potassium aluminate, calcium aluminate, and the like; suitable hydrotalcite is e.g. represented by the following general formula:

$$M^{2+}_{1-x}Al_x(OH)_2(A^{n-})_{x/n}.mH_2O$$

wherein $M^{2+}$ represents a divalent metal ion selected from magnesium, calcium and zinc; $A^{n-}$ represents an n-valent anion; x and m satisfy the conditions $0 < x < 0.5$ and $0 \leqq m \leqq 2$.

Specifically, the hydrotalcites include, for example, natural hydrotalcite $Mg_{0.75}Al_{0.25}(OH)_2CO_3.4H_2O$, synthetic hydrotalcite (ALCAMIZER, trade name by Kyowa Chemical Industry Co.; $Mg_{0.69}Al_{0.31}(OH)_2CO_3.3\cdot5H_2O$), and the like.

Of the silicate compounds mentioned above, especially preferred are silicon dioxide, aluminium silicate and aluminosilicate compounds.

The inorganic compound is used as a powder in the present invention. The powder is preferred to have the smallest possible particle size so that it may be uniformly dispersed; most preferably the powder has a mean particle size of approximately not more than 10 $\mu$m.

The content of the inorganic compound in the resin composition of the present invention is from 0.5 to 50

EP 0 552 063 A1

parts by weight, preferably from 1 to 15 parts by weight. If it is less than 0.5 part by weight, the effect in decreasing generation of hydrogen fluoride gas would be too small. However, if it is more than 50 parts by weight, the strength and the outward appearance of articles formed from the resin composition would be poor.

Where the resin composition is used for forming an agricultural covering film, the content of the inorganic compound therein is preferably from 0.5 to 20 parts by weight, especially preferably from 2 to 15 parts by weight. If it is more than 20 parts by weight, the transparency of the film may be reduced disadvantageously.

The fluoroalkyl group-containing compounds for use in the present invention are not specifically restricted. For instance, they include polytetrafluoroethylene, tetrafluoroethylene-hexafluoropropylene copolymer, fluoroalkyl group-containing fluorine surfactant as mentioned below, and like others.

The fluoroalkyl group-containing compounds having 1,1-difluoromethyl group termination for use in the present invention are also not specifically restricted. For instance, they include 11H-eicosafluoroundecanoic acid, 1H,1H,11H-eicosafluoro-1-undecanol, 1H,1H,7H-dodecafluoro-1-heptanol, fluoroalkyl group-containing fluorine surfactant having 1,1-difluoromethyl group termination, and like others.

The fluoroalkyl group-containing fluorine surfactants for use in the present invention are not specifically restricted, provided that they have a fluoroalkyl group-containing moiety and a hydrophilic group moiety. The fluoroalkyl group-containing moiety may be one in which the fluoroalkyl group contains one or more perfluoromethylene groups. The hydrophilic group moiety in it indicates one having at least one anionic group such as a carboxylate, sulfonate, phosphonate or the like group in the molecule; one having at least one cationic group such as an ammonium, pyridinium, phosphonium or the like group in the molecule; one having at least one pair of an anionic group and a cationic group in the molecule; and one having at least one hydrophilic nonionic group such as a polyethylene oxide, polypropylene oxide, polyglycerin, sorbitol or the like group in the molecule. In view of the compatibility with polyolefin resins and of the heat resistance of the resin composition, a fluoroalkyl group-containing fluorine surfactant having a hydrophilic nonionic group moiety therein is preferred.

The content of the fluoroalkyl group-containing compound in the resin composition of the present invention is from 0.02 to 5 parts by weight. If it is less than 0.02 part by weight, the effect of the fluoroalkyl group-containing compound would be insufficient;

if it is more than 5 parts by weight, transfer of the compound to the surface of the resin article would be too great so that the outward appearance of the article would be marred.

The resin composition of the present invention can be compounded with usually employed antioxidants, lubricants, ultraviolet absorbants, weathering stabilizers, pigments, anti-dripping agents, etc., if desired.

The agricultural covering film of the present invention contains a fluoroalkyl group-containing fluorine surfactant. Of such surfactants, preferred is one having at least one hydrophilic nonionic group in the hydrophilic moiety of the surfactant molecule - as having excellent interactivity with the inorganic compound having silicon-oxygen bond or aluminium-oxygen bond and with the polyolefin resin, and for exhibiting a durable fog-preventing effect (anti-fogging effect) in houses and tunnels made of the resin composite. Especially preferred is one having a polyethylene oxide structure. The number of fluoroalkyl groups in the surfactant is preferably one per molecule from the viewpoints of production, anti-dripping and fog-preventing properties and durability of these properties. A fluoroakyl group-containing fluorine surfactant having 1,1-difluoromethyl group at the terminal thereof, which is represented by the following structure, is preferred, as being especially excellent in the durability of the anti-dripping property and the fog-preventing property.

$$H(CF_2CF_2)_4CH_2OCH_2C(OH)HCH_2O(CH_2CH_2O)_nH$$
$$H(CF_2CF_2)_4CH_2OCH_2C(OH)HCH_2O(CH_2CH_2O)_nCH3$$
$$H(CF_2CF_2)_4CH_2O(CH_2CH_2O)_nH$$
$$H(CF_2CF_2)_4OOCHNPhCH_2PhNHCOO(CH_2CH_2O)_nH$$

In these formulae, n represents an integer of from 4 to 10.

Though it may give less durable anti-dripping and fog-preventing property, a fluoroalkyl group-containing fluorine surfactant having a perfluoromethyl group at the terminal may be used in the present invention. For instance, the following are mentioned :

$$CF_3(CF_2)_7CH_2OCH_2C(OH)HCH_2O(CH_2CH_2O)_nH$$
$$(CF_3)_2CF(CF_2CF_2)_3CH_2OCH_2C(OH)HCH_2O(CH_2CH_2O)_nH$$
$$CF_3(CF_2)_{10}CH_2O(CH_2CH_2O)_nH$$
$$CF_3(CF_2)_6CONH(CH_2CH_2O)_nH$$

In these formulae, n represents an integer of from 4 to 10.

For the purpose of preventing film fogging, the content of fluoroalkyl group-containing compound in the resin composition of the invention is preferably 0.02 to 0.5 part by weight, especially preferably from 0.05 to 0.2 part by weight. If it is less than 0.02 part by weight, the fog-preventing effect would be insufficient;

if it is more than 0.5 part by weight, there might be no further improvement and incorporation of such larger amounts could be uneconomic and might impair the outward appearance of the film due to bleeding of the compound.

The agricultural covering film of the present invention contains nonionic surfactant as an anti-dripping agent. The nonionic surfactant in the film is one having at least one hydrophilic nonionic group, such as a glycerin group, a sorbitol group, a polyglycerin group, a polyethylene oxide group, a polypropylene oxide group or the like, in the molecule. For instance, mentioned are sorbitan monostearate, sorbitan monostearate-ethylene oxide (3 mols) adduct, glycerin monostearate, diglycerin distearate, diglycerin sesquioleate, tetraglycerin monolaurate, tetraglycerin tristearate, polyethylene glycol monopalmitate, polypropylene glycol monolaurate, and the like. The content of the nonionic surfactant in the film is from 0.3 to 5.0 parts by weight, especially preferably from 0.5 to 3.0 parts by weight. If it is less than 0.3 part by weight, the anti-dripping effect would be insufficient; if it is more than 5.0 parts by weight, there may be no further improvement and incorporation of such larger amounts of the compound could be uneconomic and impair the outward appearance of the film due to bleeding of the compound.

The agricultural covering film of the present invention may contain fatty acid amide compound, such as stearic acid amide, oleic acid amide or the like, as lubricant and may contain weathering stabilizer such as hindered amine weathering stabilizer, ultraviolet absorbent or the like, if desired.

The thickness of the agricultural covering film of the present invention is preferably from 0.02 to 0.3 mm, more preferably from 0.03 to 0.2 mm. If it is less than 0.02 mm, the strength of the film might be insufficient; if it is more than 0.3 mm, the facility for film heat-sealing and the facility for film covering on frames of houses might be unduly impaired.

The agricultural covering film of the present invention may have a single layer structure or a two(or more)-layer structure for enhancing mechanical properties and optical properties. Preferably, it has a three-layer structure. When the film has a three-layer structure, for example, the resin forming the middle layer may be a homopolymer of an $\alpha$-olefin or a copolymer of different monomers consisting essentially of $\alpha$-olefin, e.g. polyethylene, polypropylene, ethylene-$\alpha$-olefin copolymer (e.g. ethylene-propylene copolymer, ethylene-butene-1 copolymer, ethylene-4-methyl-1-pentene copolymer, ethylene-hexene copolymer, ethylene-octene copolymer, ethylene-decene copolymer or the like), ethylene-vinyl acetate copolymer, ethylene-acrylic acid copolymer, ethylene-methyl methacrylate copolymer, ethylene-vinyl acetate-methyl methacrylate copolymer, ionomer resin and the like. The resins forming the outer layer and the inner layer may be of the same categories as for the middle layer. In view of the fact that the film must be durable to elevation of the temperature in summer due to contact with the house framework and durable to friction from air ventilation, those having especially excellent heat resistance, weather resistance and wear resistance are preferred. For instance, for polyethylene and ethylene-$\alpha$-olefin copolymer, preferred are those having a density of from 0.91 g/cm³ to 0.935 g/cm³ and a melt flow index of from 0.1 g/10 min to 4 g/10 min. If the melt flow index is less than 0.1 g/10 min, formation of the film could be difficult; if it is more than 4 g/10 min, the friction characteristic and the film strength could be poor. For an ethylene-vinyl acetate copolymer, preferred is one having a vinyl acetate content of 20 % by weight or less (more preferably 10 % by weight or less) and a melt flow index of from 0.1 g/10 min to 3 g/10 min, more preferably from 0.1 g/10 min to 1.5 g/10 min. If the vinyl acetate content is more than 20 % by weight, the film could have unsatisfactory heat resistance; if the melt flow index is less than 0.1 g/10 min, the film could have poor workability, and if it is more than 3 g/10 min, the film might have unsatisfactory friction characteristic and strength. For an ethylene-acrylic acid copolymer, preferred is one having an acrylic acid content of 30 % by weight or less, more preferably 25 % by weight or less. For an ionomer resin, preferred is one having a density of from 0.935 g/cm³ to 0.975 g/cm³ and a melt flow index of from 0.5 g/10 min to 7 g/10 min. The metal ion is preferably Na⁺, Zn²⁺ or the like type.

For producing the agricultural film of the present invention, the mixing and kneading method may be employed along with a calendering method, a T-die extrusion molding method, an inflation molding method or the like. The film may be formed to have a single-layer structure or a two(or more)-layer structure.

In accordance with the present invention, there are provided a resin composition containing fluoroalkyl group-containing compound, from which generation of hydrogen fluoride gas on burning may be decreased noticeably and which may therefore be burnt in the open air with ease, and an agricultural covering film made of the resin composition. Where a fluoroalkyl compound having 1,1-difluoromethyl group as the terminal is incorporated into the resin composition of the present invention, not only may generation of hydrogen fluoride gas on burning be decreased, but also generation of perfluoroisobutene on burning may be substantially inhibited. The preferred agricultural covering film of the present invention has excellent and durable fog-preventing properties, and may be effectively used in horticultural and agricultural applications.

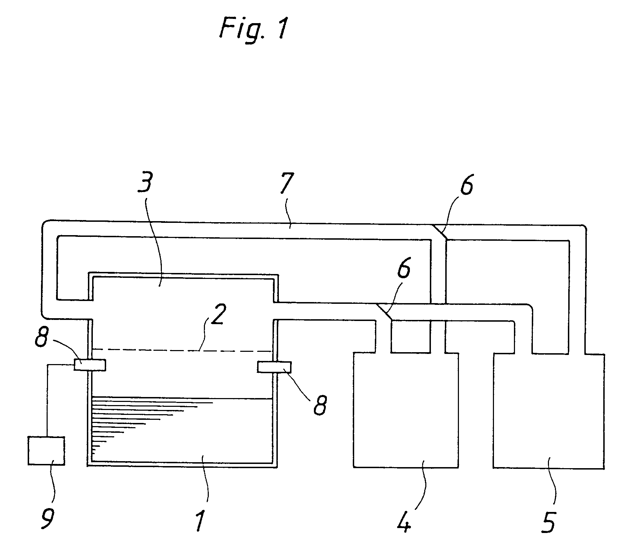

The present invention is illustrated by the following Examples and by the accompanying drawing wherein Fig. 1 is a schematic view of apparatus used for the evaluation of the thickness of fog generation and dripping property of films.

In the drawing, indicated with the numeral 1 is a thermostatic water vessel, 2 is a film to be tested, 3 is a chamber, 4 is a thermostatic (10°C) air generator, 5 is a thermostatic (0 to 1°C) air generator, 6 is a damper, 7 is an air duct, 8 is a photoelectric mist measuring apparatus, and 9 is a recorder (millivoltmeter).

The following Examples are to concretely embody the present invention and are not intended to restrict the scope of the present invention.

In the Examples the thickness of fog generation is evaluated in the following manner.

Measurement Method for Thickness of Fog Generation

A film 2 to be tested (40 x 50 cm) was pitched or spread horizontally 30 cm above the surface of water of a water vessel 1 adjusted at a temperature of 30°C, and air adjusted at 10°C was flown into a chamber 3 faced at the external surface of the film, whereupon the thickness of fog generation in the vicinity of the internal surface of the film generated due to a rapid temperature change inside and outside the film was measured by means of a photoelectric mist measuring apparatus 8. The thickness of fog generation was displayed in a recorder 9 in terms of millivolt, and the higher the numerical value, the more vigorous the fog generation. After the measurement, by again switching the damper 6, air adjusted at 10°C was flown into the chamber 3, followed by keeping this state for 10 days. Thereafter, measurement of the thickness of fog generation was repeatedly carried out in the same manner as described above.

EXAMPLE 1

100 parts by weight of a low-density polyethylene resin (SUMIKATHENE F208-0, trade name of product of Sumitomo Chemical Co., Ltd.), 3 parts by weight of silicon dioxide powder (AEROSIL 200, trade name of product of Nippon Aerosil Co., Ltd.) as an inorganic compound, and 0.1 part by weight of fluoroalkyl group-containing compound A (mentioned below) were kneaded in a Banbury mixer at 150°C to give a resin composition. This was fired in a mixed gas comprising 20 % of oxygen and 80 % of argon at 800°C, and the combustion gas was trapped in aqueous 0.01 N sodium hydroxide solution to determine the hydrogen fluoride gas by ion chromatography. The detected amount of the hydrogen fluoride gas was 320 ppm.
Fluoroalkyl group-containing compound A:
$$F(CF_2CF_2)_4CH_2OCH_2C(OH)HCH_2O(CH_2CH_2O)_4H$$

EXAMPLE 2

100 parts by weight of a low-density polyethylene resin (SUMIKATHENE F208-0, trade name of product of Sumitomo Chemical Co., Ltd.), 10 parts by weight of aluminium silicate powder (SILTON, trade name of product of Mizusawa Chemical Co., Ltd.) as an inorganic compound, and 0.1 part by weight of fluoroalkyl group-containing compound A were kneaded in a Banbury mixer at 150°C to give a resin composition. This was subjected to the same gas analysis as that in Example 1 to give the result that the detected amount of the hydrogen fluoride gas was 300 ppm.

EXAMPLE 3

100 parts by weight of a low-density polyethylene resin (SUMIKATHENE F208-0, trade name of product of Sumitomo Chemical Co., Ltd.), 10 parts by weight of silicon dioxide powder (SNOWMARK, trade name of product of Kinsei Kogyo KK) as an inorganic compound, and 0.1 part by weight of fluoroalkyl group-containing compound A were kneaded in a Banbury mixer at 150°C to give a resin composition- This was subjected to the same gas analysis as that in Example 1 to give the result that the detected amount of the hydrogen fluoride gas was 380 ppm.

EXAMPLE 4

100 parts by weight of a low-density polyethylene resin (SUMIKATHENE F208-0, trade name of product of Sumitomo Chemical Co., Ltd.), 10 parts by weight of aluminium silicate powder (SILTON, trade name of product of Mizusawa Chemical Co., Ltd) as an inorganic compound, and 0.1 part by weight of fluoroalkyl group-containing compound B (mentioned below) were kneaded in a Banbury mixer at 150°C to give a resin composition. This was subjected to the same gas analysis as that in Example 1 to give the result that the detected amount of the hydrogen fluoride gas was 330 ppm.
Fluoroalkyl group-containing compound B:
$$(CF_3)_2CF(CF_2CF_2)_3CH_2OCH_2C(OH)HCH_2O(CH_2CH_2O)_5H$$

COMPARATIVE EXAMPLE 1

A comparative resin composition was prepared in the same manner as in Example 1, except that no inorganic compound was added. This was subjected to the same gas analysis as that in Example 1 to give the result that the detected amount of the hydrogen fluoride gas was 480 ppm.

COMPARATIVE EXAMPLE 2

A comparative resin composition was prepared in the same manner as in Example 4, except that no inorganic compound was added. This was subjected to the same gas analysis as that in Example 1 to give the result that the detected amount of the hydrogen fluoride gas was 510 ppm.

EXAMPLE 5

As shown in Table 1 below, 100 parts by weight of an ethylene-vinyl acetate copolymer resin (EVATATE H2021, trade name of product of Sumitomo Chemical Co., Ltd.), 10 parts by weight of silicon oxide powder (AEROSIL 200, trade name of product of Nippon Aerosil Co., Ltd.) as an inorganic compound, 0.1 part by weight of a fluoroalkyl group-containing surfactant having 1,1-difluoromehtyl group at the terminal as a fluorine surfactant, and 1 part by weight of sorbitan sesquipalmitate and 0.5 part by weight of monoglycerin - monostearate as nonionic surfactants were kneaded in a Banbury mixer at 150°C and granulated with a granulator to give resin composition pellets. Next, the resin composition pellets thus prepared were formed into a film having a thickness of 75 μm with an inflation filming machine at 180°C. The film was tested with the tester of Fig. 1 to evaluate the thickness of fog generation. Apart from this, the film was fired in a mixed gas comprising 20 % of oxygen and 80 % of argon at 800°C, whereupon the combustion gas generated was trapped in aqueous 0.01 N sodium hydroxide solution to determine the hydrogen fluoride gas by ion chromatography and separately it w as trapped in a pack to determine the perfluoroisobutene by gas chromatography. The results obtained are shown in Table 1 below. As is noted therefrom, the film displayed an excellent fog-preventing property and gave no perfluoroisobutene, and the amount of the hydrogen fluoride gas generated therefrom was noticeably reduced to be only 300 ppm.

EXAMPLES 6 TO 9

Using the components as shown in Table 1 below, film samples were prepared in the same manner as in Example 5 and these were subjected to the test of determining the thickness of fog generation and to the test of analyzing the combustion gas. The results obtained are shown in table 1. As is noted therefrom, all the film samples displayed an excellent fog-preventing property and gave no perfluoroisobutene, and the amount of the hydrogen fluoride gas generated therefrom was noticeably reduced.

COMPARATIVE EXAMPLE 3

Using the components as shown in Table 1 below, a comparative film sample was prepared in the same manner as in Example 5 and this was subjected to the test of determining the thickness of fog generation and to the test of analyzing the combustion gas. The results obtained are shown in Table 1. As is noted therefrom, the film displayed a somewhat poor fog-preventing property, and the amount of the hydrogen fluoride gas generated from it was 510 ppm and that of the perfluoroisobutene was 1.5 ppm.

COMPARATIVE EXAMPLE 4

Using the components as shown in Table 1 below, a comparative film sample was prepared in the same manner as in Example 5 and this was subjected to the test of determining the thickness of fog generation and to the test of analyzing the combustion gas. The results obtained are shown in Table 1. As is noted therefrom, the film displayed a somewhat poor fog-preventing property, and the amount of the hydrogen fluoride gas generated from it was 500 ppm.

COMPARATIVE EXAMPLE 5

Using the components as shown in Table 1 below, a comparative film sample was prepared in the same manner as in Example 5 and this was subjected to the test of determining the thickness of fog generation.

The result obtained is shown in Table 1. As is noted therefrom, the film displayed an extremely bad fog-preventing property.

EVA: ethylene-vinyl acetate copolymer (EVATATE 2021, trade name of product of Sumitomo Chemical Co., Ltd.)

LDPE: low-density polyethylene (SUMIKATHENE F208-1, trade name of product of Sumitomo Chemical Co., Ltd.)

LLDPE: linear low-density polyethylene (SUMIKATHENE FA101-1, trade name of product of Sumitomo Chemical Co., Ltd.)

Fluorine Surfactant B:

$$F(CF_2CF_2)_4CH_2OCH_2C(OH)HCH_2O(CH_2CH_2O)_4H$$

Fluorine Surfactant C:

$$H(CF_2CF_2)_4CH_2OCH_2C(OH)HCH_2O(CH_2CH_2O)_4H$$

Fluorine Surfactant D:

$$H(CF_2CF_2)_4CH_2OCH_2C(OH)HCH_2O(CH_2CH_2O)_4CH$$

Fluorine Surfactant E:

$$H(CF_2CF_2)_4CH_2O(CH_2CH_2)_5H$$

TABLE 1

| | Resin | Anti-dripping Agent | | Fluorine Surfactant | |
|---|---|---|---|---|---|
| | | Kind | Amount (wt.pts.) | Kind | Amount (wt.pts.) |
| Example 5 | EVA | sorbitan sesquipalmitate<br>monoglycerin monostearate | 1.0<br>0.5 | C | 0.1 |
| Example 6 | EVA | sorbitan sesquipalmitate<br>monoglycerin monostearate | 1.0<br>0.5 | D | 0.1 |
| Example 7 | EVA | sorbitan sesquipalmitate<br>monoglycerin monostearate | 1.0<br>0.5 | E | 0.1 |
| Example 8 | LDPE | sorbitan sesquipalmitate<br>monoglycerin monostearate | 1.0<br>0.5 | C | 0.1 |
| Example 9 | LLDPE | diglycerin distearate<br>monoglycerin monostearate | 1.0<br>0.5 | C | 0.1 |

TABLE 1 — (Cont'd....)

| | Resin | Inorganic Compound | | Thickness of Fog Generation (mV) | | | Analysis of Combustion Gas (ppm) | |
|---|---|---|---|---|---|---|---|---|
| | | Kind (trade name) | Amount (wt.pts.) | after 1 day | after 10 days | after 20 days | HF | perfluoro-isobutene |
| Example 5 | EVA | silicon oxide (AEROSIL 200, by Nippon Aerosil Co.) | 5 | 0.2-0.4 | 0.2-0.4 | 0.2-0.3 | 300 | No |
| Example 6 | EVA | aluminium silicate (SILTON AMT, by Mizusawa Chemical Co.) | 10 | 0.2-0.4 | 0.2-0.3 | 0.2-0.3 | 250 | No |
| Example 7 | EVA | silicon oxide (SNOWMARK, by Kinsei Kogyo KK) | 10 | 0.2-0.4 | 0.2-0.4 | 0.2-0.3 | 310 | No |
| Example 8 | LDPE | silicon oxide (AEROSIL 200, by Nippon Aerosil Co.) | 5 | 0.2-0.4 | 0.2-0.3 | 0.2-0.3 | 290 | No |
| Example 9 | LLDPE | aluminium silicate (SILTON AMT, by Mizusawa Chemical Co.) | 5 | 0.2-0.4 | 0.2-0.4 | 0.2-0.3 | 330 | No |

| | Resin | Anti-dripping Agent | | Fluorine Surfactant | |
|---|---|---|---|---|---|
| | | Kind | Amount (wt.pts.) | Kind | Amount (wt.pts.) |
| Comparative Example 3 | EVA | sorbitan sesquipalmitate<br>monoglycerin monostearate | 1.0<br><br>0.5 | B | 0.1 |
| Comparative Example 4 | EVA | sorbitan sesquipalmitate<br>monoglycerin monostearate | 1.0<br><br>0.5 | C | 0.1 |
| Comparative Example 5 | EVA | sorbitan sesquipalmitate<br>monoglycerin monostearate | 1.0<br><br>0.5 | No | |

| | Resin | Inorganic Compound | | Thickness of Fog Generation (mV) | | | Analysis of Combustion Gas (ppm) | |
|---|---|---|---|---|---|---|---|---|
| | | Kind (trade name) | Amount (wt.pts.) | after 1 day | after 10 days | after 20 days | HF | perfluoro-isobutene |
| Comparative Example 3 | EVA | No | | 0.2-0.3 | 0.2-0.4 | 0.8-1.2 | 510 | 1.5 |
| Comparative Example 4 | EVA | No | | 0.2-0.4 | 0.2-0.4 | 0.3-0.5 | 530 | No |
| Comparative Example 5 | EVA | silicon oxide (AEROSIL 200, by Nippon Aerosil Co.) | 5 | 2.1-3.6 | 2.0-4.2 | 1.8-3.6 | | |

## Claims

1. A polyolefin resin composition containing, per 100 parts by weight of polyolefin resin, from 0.5 to 50 parts by weight of inorganic compound selected from those having a silicon-oxygen bond and those having an

11

aluminium-oxygen bond and from 0.02 to 5 parts by weight of fluoroalkyl group-containing compound.

2. A composition according to claim 1 containing at least one inorganic compound selected from silicon dioxide, aluminium silicate and aluminosilicate compounds.

3. A composition according to claim 1 or 2 containing fluoroalkyl group-containing compound having a terminal 1,1-difluoromethyl group.

4. A composition according to any preceding claim in which the fluoroalkyl group-containing compound comprises fluoroalkyl group-containing fluorine surfactant.

5. A composition according to claim 4 containing fluoroalkyl group-containing fluorine surfactant having one fluoroalkyl group in the molecule.

6. A composition according to claim 4 or 5 containing, per 100 parts by weight of polyolefin resin, from 0.5 to 20 parts by weight of said inorganic compound, from 0.02 to 0.5 parts by weight of fluoroalkyl group-containing fluorine surfactant and from 0.3 to 5 parts by weight of nonionic surfactant.

7. A composition according to claim 6 containing from 0. 5 to 3 parts by weight of nonionic surfactant per 100 parts by weight of polyolefin resin.

8. A film of a composition according to any of claims 1 to 5.

9. An agricultural or horticultural film of a composition according to claim 6 or 7.

*Fig. 1*

## European Patent Office

## EUROPEAN SEARCH REPORT

Application Number

EP 93 30 0299

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 421 748 (SUMITOMO CHEMICAL KK) * claim 1 * --- | 1 | C08L23/02 C08K13/02 //(C08K13/02, 5:02, 3:26) A01G9/14 |
| X | DOCUMENTATION ABSTRACTS JOURNAL A. PLASTICS, POLYMERS LONDON GB 'synthetic resin material for agricultural use' * abstract * & JP-A-63 312 361 (MITSUBISHI KASEI) 15 June 1987 ----- | 1 | |

| | | | TECHNICAL FIELDS SEARCHED (Int. Cl.5 ) |
|---|---|---|---|
| | | | C08L C08K A01G |

The present search report has been drawn up for all claims

| Place of search | Date of completion of the search | Examiner |
|---|---|---|
| THE HAGUE | 22 APRIL 1993 | Dieter Schüler |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................................
& : member of the same patent family, corresponding document

EPO FORM 1503 03.82 (P0401)